# EUROPÄISCHE PATENTSCHRIFT

(11) **EP 3 500 764 B1**
(45) Veröffentlichungstag und Bekanntmachung des Hinweises auf die Patenterteilung: **03.07.2024**
(21) Anmeldenummer: 17751376.9
(22) Anmeldetag: 08.08.2017
(51) Int. Cl.: F16B 45/02

(54) **ANSCHLAGMITTEL ZUR EINARMIGEN BETÄTIGUNG DURCH EINEN FERNGESTEUERTEN GREIFER INSBESONDERE EINES FERNGESTEUERTEN FAHRZEUGES**
STOP MEANS FOR ACTUATING BY MEANS OF A REMOTE-CONTROLLED GRIPPER IN PARTICULAR OF A REMOTE-CONTROLLED VEHICLE USING A SINGLE ARM
MOYEN DE BUTÉE SERVANT À L'ACTIONNEMENT PAR BRAS UNIQUE AU MOYEN D'UN DISPOSITIF DE PRÉHENSION TÉLÉCOMMANDÉ EN PARTICULIER D'UN VÉHICULE TÉLÉCOMMANDÉ

(30) Priorität: 19.08.2016 DE 102016215631
(43) Veröffentlichungstag der Anmeldung: 26.06.2019
(73) Patentinhaber: RUD Ketten Rieger & Dietz GmbH u. Co. KG, 73432 Aalen (DE)
(72) Erfinder: BETZLER, Michael, 73453 Abtsgmünd (DE)
(74) Vertreter: Grünecker Patent- und Rechtsanwälte PartG mbB
(86) Internationale Anmeldenummer: PCT/EP2017/070076
(87) Internationale Veröffentlichungsnummer: WO 2018/033435

(56) Entgegenhaltungen:
- WO-A1-02/25123
- GB-A- 910 904
- US-A- 2 116 880
- US-A- 2 197 997
- US-A1- 2002 162 201

## Beschreibung

Die Erfindung betrifft ein Anschlagmittel zur einarmigen Betätigung durch einen ferngesteuerten Greifer, insbesondere eines ferngesteuerten Fahrzeuges, mit einer von einer Schließ- in eine Offenstellung beweglichen Schließe, einem in der Schließstellung von der Schließe verschlossenen und in der Offenstellung geöffneten Anschlagkörper und einem Taster zum Öffnen der Schließe, der einen Getriebeabschnitt aufweist, der die Schließe bewegungsübertragend mit dem Taster koppelt.

Ein Anschlagmittel mit diesen Merkmalen ist aus der WO 02/25123 A1 bekannt. Hierbei handelt es sich um einen mit einer Schließe versehenen Haken, der durch einen Greifer eines ferngesteuerten Unterwasserfahrzeuges betätigt werden soll.

Bei diesem Greifer besteht die Gefahr, dass sich der Taster zum Öffnen der Schließe und ein gegenüberliegender Entriegelungstaster sich gegenseitig blockieren.

In der US 2,197,997 A ist ebenfalls ein Haken gezeigt, bei der eine Schließe in der Schließstellung automatisch versperrt ist, um ein versehentliches Bewegen der Schließe in die Offenstellung zu vermeiden.

Weitere Anschlagmittel sind aus der US 2 116 880 A und US 2002/162201 A1 bekannt. Die Anschlagmittel weisen einen Sperrmechanismus auf, der durch eine Betätigung gelöst werden kann und das Bewegen der Schließe in die Offenstellung erlaubt.

Um dies zu vermeiden ist erfindungsgemäß bei dem eingangs genannten Anschlagmittel vorgesehen, dass der Taster einen Sperrbereich aufweist, der sich in der Schließstellung mit der Schließe im Eingriff befindet und die Schließe in der Schließstellung arretiert.

Da nunmehr der Sperrbereich und der Getriebeabschnitt an einem einzigen Bauteil, nämlich dem einzigen Taster zum Öffnen der Schließe angeordnet sind, kann eine gegenseitige Blockade wie beim Anschlagmittel der WO 02/25123 A1 nicht mehr stattfinden.

Wenn der Taster aufgrund einer sich im Betrieb zufällig ergebenden Position des Anschlagmittels nur schwer zugänglich ist, ist erfindungsgemäß vorgesehen, wenn eine zweite Möglichkeit zum Öffnen und Schließen des Anschlagkörpers vorhanden ist. Zu diesem Zweck ist der Taster auf einer Seite mit einer Zugmittelaufnahme versehen.

Die Zugmittelaufnahme befindet sich auf derjenigen Seite des Tasters, die der aus dem Grundkörper ragenden Seite gegenüberliegt.

Die Erfindung kann durch die folgenden weiterführenden Ausgestaltungen, die jeweils für sich betrachtet vorteilhaft und beliebig miteinander kombinierbar sind, weiter verbessert werden.

So kann gemäß einer ersten vorteilhaften Ausgestaltung der Taster von der Schließstellung in die Offenstellung beweglich am Anschlagmittel gehalten sein und eine zwischen der Schließ- und der Offenstellung angeordnete Freigabestellung aufweisen. In der Freigabestellung ist bevorzugt die Arretierung der Schließe durch den Sperrbereich gelöst und die Schließe befindet sich noch in der Schließstellung. Diese Maßnahme stellt sicher, dass der Sperrbereich des Anschlagmittels den Getriebeabschnitt nicht blockieren kann. Denn zunächst wird in einer ersten Bewegung von der Schließ- in die Freigabestellung die Arretierung durch Freigabe des Sperrbereichs gelöst, bevor mit der nachfolgenden Bewegung der Freigabestellung die Schließe mit Hilfe des Getriebeabschnitts in die Offenstellung bewegt wird. Der Getriebeabschnitt befindet sich in der Freigabestellung bevorzugt gerade im Eingriff mit der Schließe, während er in der Schließstellung des Tasters sich noch nicht mit der Schließe im Eingriff befindet, so dass vor dem Lösen der Arretierung keine Antriebsbewegung vom Taster auf die Schließe übertragen wird.

Gemäß einer weiteren vorteilhaften Ausgestaltung kann der Taster ausgehend von der Schließstellung einen Leerhub aufweisen, über den die Schließe in der Schließstellung verbleibt. Am Ende des Leerhubes kann der Sperrbereich außer Eingriff und/oder der Getriebeabschnitt in Eingriff mit der Schließe gebracht sein. Vorzugsweise dient der Leerhub dazu, wechselweise den Getriebeabschnitt und den Sperrbereich des Tasters mit der Schließe in Eingriff zu bringen. Am Ende des Leerhubes kann sich der Taster in der Freigabestellung befinden.

Da im Gegensatz zur WO 02/25123 A1 sowohl die Arretierung als auch der Antrieb der Schlie-ße in einem einzigen Taster vereint sind, reicht es zur Betätigung durch den Greifer des ferngesteuerten Fahrzeugs aus, wenn der Taster nur an einer Seite des Anschlagmittels von außen zugänglich angeordnet ist bzw. aus einer Seite des Anschlagmittels herausragt. Bevorzugt ragt der Taster aus einer Schmalseite des Anschlagmittels.

Das Anschlagmittel weist bevorzugt einen monolithisch ausgestalteten, beispielsweise geschmiedeten, Grundkörper auf, der den Anschlagkörper ausbildet. Der Anschlagkörper kann hakenförmig ausgestaltet sein.

Zum Anbringen des Anschlagmittels an weiteren Hebe-, Anschlag- oder Zurrmitteln kann der Grundkörper eine Befestigungsöffnung aufweisen, die sich bevorzugt an dem dem Anschlagkörper gegenüberliegenden Ende befindet, wobei der Taster zwischen dem Anschlagauge und der Befestigungsöffnung angeordnet sein kann.

Damit die Zugmittelaufnahme gegen Beschädigungen gesichert ist, kann diese sich bevorzugt sowohl in der Offen- als auch in der Schließstellung des Tasters innerhalb des Grundkörpers befinden. Bei der Zugmittelaufnahme kann es sich in einem einfachen Fall um eine Gabel oder Bohrung handeln, durch die ein Zugmittel, beispielsweise ein Seil beziehungsweise ein in der Zugmittelaufnahme zum Öffnen der Schließe angebrachtes Zugseil sein, das aus der dem Taster gegenüberliegenden Seite des Anschlagmittels ragt und das insbesondere zu einer Schlaufe geformt sein kann, gesteckt und in der das Zugmittel zugfest verankert werden kann. Durch Zug am Zugmittel wird dann, wie bei einem Drücken des Tasters, die Schließe geöffnet. Der Zug am Zugmittel wird über die Zugmittelaufnahme einfach an den Taster übertragen.

Die Arretierung der Schließe in der Schließstellung kann durch eine Sperrfläche des Sperrbereichs erfolgen, die in der Schließstellung an einer Gegenfläche der Schließe anliegt und die Bewegung der Schließe in die Offenstellung blockiert. In der Freigabe- und/oder Offenstellung sind Sperr- und Gegenfläche bevorzugt außer Eingriff gebracht. Die Sperrfläche liegt dabei bevorzugt hinterschneidungsfrei in Bewegungsrichtung des Tasters von der Schließ- in die Offenstellung an der Gegenfläche an. Dies erlaubt es, die Arretierung der Schließe mit geringer Kraft zu lösen, weil die Sperrfläche einfach in Bewegungsrichtung des Tasters von der Schließ- in die Offenstellung von der Gegenfläche weggleiten kann. Eine geringe Hinterschneidung kann jedoch gewünscht sein, um in der Schließstellung Schließe und Taster miteinander zu verrasten. Die Verrastung kann erst durch einen höheren Kraftaufwand überwunden werden, was gegen Fehlbedienung schützt.

Der Taster kann an einem Ende um eine Tasterachse schwenkbar im Anschlagmittel gehalten sein. Um möglichst große Kräfte auf die Schließe zu übertragen, befindet sich bevorzugt der Sperrbereich und der Getriebeabschnitt an dem anderen Ende des Tasters.

Nachdem bei dem erfindungsgemäßen Anschlagmittel ein separater Entriegelungstaster wie in der WO 02/251123 A1 wegfällt, kann die vom Taster wegweisende Seite des Anschlagmittels genutzt werden, um das Ergreifen des Anschlagmittels durch den Greifer des ferngesteuerten Fahrzeuges zu verbessern. So kann beispielsweise eine vom Taster wegweisende Grifffläche an der gegenüber dem Taster liegenden Seite des Grundkörpers quer zur Bewegungsrichtung des Tasters verbreitert sein. Dadurch ist ein sichereres Greifen des Anschlagmittels durch den Greifer auch in ungünstigeren Winkeln möglich.

Die Grifffläche kann insbesondere wenigstens einen von einer Flachseite des Grundkörpers bzw. quer zur Bewegungsrichtung des Tasters vorstehenden Flügel aufweisen, bzw. kann die Grifffläche an wenigstens einem quer zur Bewegungsrichtung des Tasters vorstehenden Flügel eines den Taster aufnehmenden Grundkörpers ausgebildet sein. Bevorzugt sind an beiden Flachseiten bzw. an beiden quer zur Bewegungsrichtung des Tasters liegenden Seiten des Anschlagmittels Flügel vorgesehen.

In einer weiteren Ausgestaltung ist ein den Taster aufnehmender Grundkörper an einer den Taster zur Betätigung freigebenden Aussparung mit wenigstens einem verdickten Schutzwulst versehen.

Um das Ergreifen des Anschlagmittels in einem ungünstigen Winkel weiter zu vereinfachen, kann die verbreiterte Grifffläche nach außen, in Richtung weg vom Grundkörper, zum Taster hin geneigt oder ballig verlaufen.

Gemäß einer weiteren Ausgestaltung kann der Taster wenigstens abschnittsweise in einer insbesondere rechteckigen Aussparung des Grundkörpers liegen, die den Taster zur Betätigung freigibt. Die Aussparung befindet sich bevorzugt auf der Seite der Schließe des Anschlagkörpers.

Zusätzlich zur Schließe, die in Richtung der Schließstellung durch insbesondere eine Schenkelfeder vorgespannt sein kann, kann auch der Taster durch eine Verschlussfeder vorgespannt sein. Als Verschlussfeder kann ebenfalls eine Schenkelfeder zum Einsatz kommen.

Die Schenkelfeder kann auch in der Freigabestellung des Tasters die Schließe in jeder Orientierung des Anschlagmittels weiterhin in der Schließstellung halten, so dass sich die Schließe auch nicht unter ihrem eigenen Gewicht öffnen kann.

Der Taster kann mit wenigstens einer Durchspülöffnung versehen sein, die den Taster in oder quer zu seiner Bewegungsrichtung durchsetzt. Die Durchspülöffnung liegt in wenigstens einer von Schließstellung und Offenstellung zumindest abschnittsweise frei, so dass sie stets von außen zugänglich ist. Insbesondere bei einer Ausgestaltung des Tasters als ein in einem Schacht des Grundkörpers aufgenommener Flachkörper kann die wenigstens eine Durchspülöffnung die Flachseiten des Tasters, die den Wänden des Schachtes gegenüberliegen, durchsetzen. Bei Unterwasseranwendungen oder in staubiger Umgebung verhindern die Durchspülöffnungen ein Festbacken des Tasters im Schacht.

Im Folgenden ist die Erfindung anhand eines Ausführungsbeispiels näher erläutert. In den Figuren werden dabei für Elemente, die einander hinsichtlich Aufbau und/oder Funktion entsprechen, der Einfachheit halber dieselben Bezugszeichen verwendet.

Es zeigen:
- Fig. 1: eine schematische Perspektivansicht eines erfindungsgemäßen Anschlagmittels;
- Fig. 2: eine schematische Ansicht entlang des Pfeils II der Fig. 1;
- Fig. 3: eine schematische Schnittdarstellung entlang der Ebene III-III der Fig. 1 in einer Schließstellung des Anschlagmittels;
- Fig. 4: die Schnittdarstellung der Fig. 3 in einer Freigabestellung des Anschlagmittels;
- Fig. 5: die Schnittdarstellung der Fig. 4 in einer Offenstellung des Anschlagmittels.

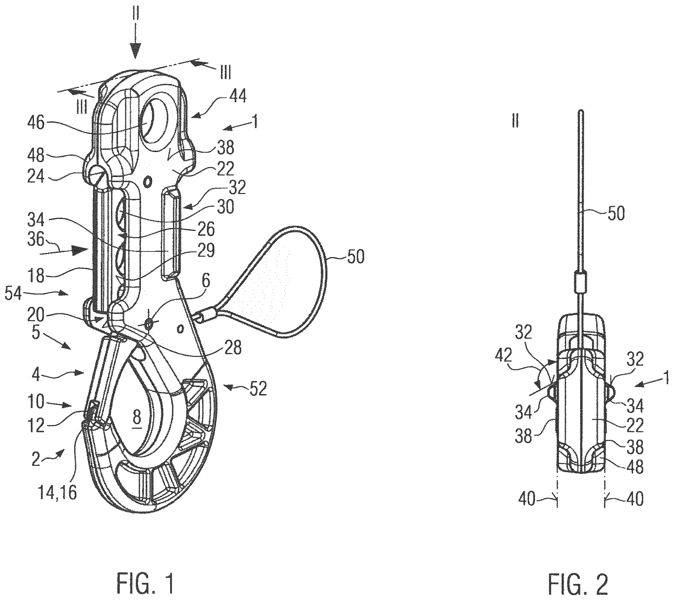

Zunächst wird der Aufbau eines erfindungsgemäßen Anschlagmittels 1 beispielhaft mit Bezug auf die Fig. 1 und 2 erläutert. Bei dem Anschlagmittel handelt es sich lediglich zu Erläuterungszwecken um einen Haken, der durch einen einzigen Greifer (nicht gezeigt) eines ferngesteuerten Unterwasserfahrzeuges (nicht gezeigt) ohne weitere Hilfsmittel betätigt werden kann.

Das Anschlagmittel 1 weist einen Anschlagkörper 2 auf, der hier hakenförmig ist. Der Anschlagkörper 2 ist durch eine bewegliche Schließe 4 verschlossen, wenn sich die Schließe 4 in der in Fig. 1 dargestellten Schließstellung 5 des Anschlagmittels befindet.

Die Schließe ist um eine Schließeachse 6 bevorzugt in einer Ebene 8 des Anschlagkörpers 2 zwischen einer in Fig. 1 nicht dargestellten Offen- und der in Fig. 1 dargestellten Schließstellung 5 verschwenkbar, wobei die Schließe 4 in der Offenstellung vom Anschlagauge 2 weggeschwenkt ist. An dem von der Schließachse 6 abgewandten Ende 10 kann die Schließe 4 mit wenigstens einem Formschlusselement 12 versehen sein, das mit einem komplementär ausgestalteten Formschlusselement 14 des Anschlagkörpers 2 in Eingriff gelangt und das Ende 10 quer zur Bewegungsebene 8 der Schließe 4 sichert. Beispielsweise kann das Ende 10 gabelförmig ausgestaltet sein und in der Schließstellung 5 einen Sicherungsvorsprung 16 des Anschlagauges 2 aufnehmen.

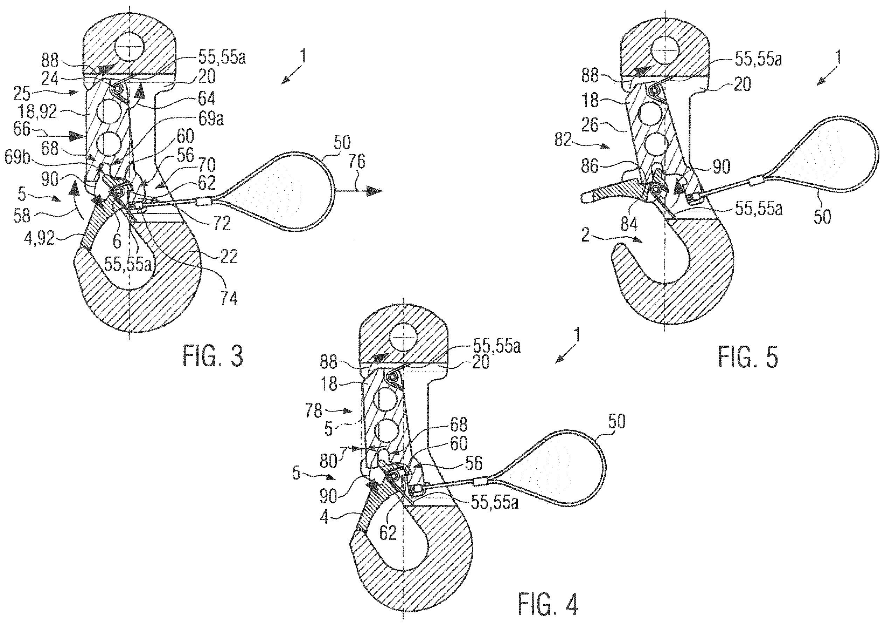

Zum Öffnen der Schließe 4 ist ein Taster 18 vorgesehen, der in einem Schacht 20 eines den Anschlagkörper 2 monolithisch ausbildenden Grundkörpers 22 des Anschlagmittels 1 aufgenommen ist. Der Taster 18 befindet sich in der Schließstellung, wenn keine Kräfte von außerhalb des Anschlagmittels 1 auf ihn einwirken. Er wird durch Drücken in eine Offenstellung bewegt und treibt dadurch, wie im Detail mit Bezug auf die Fig. 3 bis 5 erläutert ist, die Bewegung der Schließe 4 in die Offenstellung. Der Taster kann um eine Tasterachse 24 verschwenkbar am Grundkörper 22 gelagert sein. Die Tasterachse 24 befindet sich bevorzugt an dem vom Anschlagkörper 2 abgewandten Ende 25 des Tasters 18. Anstelle eines verschwenkbaren Tasters 18 kann auch ein verschiebender Taster im Schacht 20 verwendet werden, ohne dass sich in der nachstehend beschriebenen Arbeitsweise Unterschiede ergeben.

Um von außen durch einen Greifer gut zugänglich und gleichzeitig geschützt zu sein, kann der Taster in eine Aussparung 26 des Grundkörpers 22 angeordnet sein. Die Aussparung 26 kann, wie Fig. 1 zeigt, rechteckig sein.

Der Taster 18 ist bevorzugt ein Flachkörper, dessen Flachseiten 29 den Wänden 28 des Schachtes 20 zugewandt sind. Um ein Festsetzen des Tasters 18 zu vermeiden, kann wenigstens eine Durchspülöffnung 30 vorhanden sein, die die Flachseiten 29 des Tasters 18 durchsetzt und stets zumindest teilweise von außerhalb des Anschlagmittels zugänglich ist.

Gegenüberliegend dem Taster 18 kann am Anschlagmittel 1 eine verbreiterte Grifffläche 32 vorhanden sein, die ein Widerlager bei der Betätigung des Tasters 18 durch einen Greifarm bildet. Die Grifffläche 32 kann wenigstens einen Flügel 34 aufweisen, der quer zur Bewegungs- bzw. Betätigungsrichtung 36 des Tasters 18 bzw. von einer Flachseite 38 des Grundkörpers 22 vorspringt. Bevorzugt ist an beiden Flachseiten 38 des Grundkörpers 22 jeweils wenigstens ein Flügel vorgesehen. Die Griffflächen 32 sind in Richtung weg von den Flachseiten 38 zurück zum Taster 18 geneigt, so dass sie mit den von den Flachseiten 38 aufgespannten Ebenen 40 nach außen hin einen stumpfen Winkel 42 einschließen. Das Zurückspringen der Griffflächen 32 ermöglicht das Ergreifen durch einen Greifer auch in ungünstigen Winkeln, beispielsweise schräg von der Seite.

Das Anschlagmittel 1 ist ferner mit einem Befestigungsabschnitt 44 versehen, der ein Befestigungsauge 46 oder ein anders ausgestaltetes Befestigungsmittel aufweisen kann. Mit Hilfe des Befestigungsabschnittes 44 kann das Anschlagmittel 1 an weiteren Hebe-, Anschlag- oder Zurrmitteln, beispielsweise einem Seil oder einer Kette, befestigt werden. Der Taster 18 liegt in der in Fig. 1 lediglich beispielhaft dargestellten Ausgestaltung zwischen Anschlagkörper 2 und Befestigungsabschnitt 44. Die Grifffläche 32 springt gegenüber dem Befestigungsabschnitt 44 etwas in Richtung des Tasters zurück. Im Bereich des Tasters 18 ist der Grundkörper 22 folglich eingeschnürt.

An wenigstens einem Ende oder Rand der Aussparung 26 kann wenigstens ein Schutzwulst 48 vorhanden sein, der quer zur Betätigungsrichtung 36 bzw. Ebene 8 des Anschlagkörpers 2 vorspringt und eine den Taster 18 schützende Verdickung bildet.

Schließlich kann das Anschlagmittel 1 ein Zugmittel 50 aufweisen, das in den Taster 18 eingehängt ist. Das Zugmittel 50 dient zur zusätzlichen Betätigung der Schließe 4. Das Zugmittel 50 ragt aus der dem Taster 18 gegenüberliegenden Seite 52 aus dem Anschlagmittel 1. Durch Zug am Zugmittel 50 wird der Taster 18 genauso bewegt wie durch Druck auf die andere Seite 54. Das Zugmittel ist beispielsweise ein Zugseil, insbesondere ein Drahtseil mit einer Schlaufe.

Nicht zu sehen ist in Fig. 1 und 2, dass die Schließe 4 und/oder der Taster 18 durch eine Verschlussfeder in Richtung der Schließstellung 5 vorgespannt sind (vgl. Fig. 3-5).

Als nächstes wird die Funktion des Tasters 18 mit Bezug auf die Fig. 3 bis 5 beschrieben.

In der Fig. 3 ist gezeigt, dass der Taster 18 mittels einer Verschlussfeder 55 um die Tasterachse 24 entlang einer in Fig. 3 gezeigten Richtung im Uhrzeigersinn 88 vorgespannt ist.

Auch die Schließe 4 ist mit einer Verschlussfeder 55 um die Schließeachse 6 entlang einer in Fig. 3 gezeigten Richtung entgegen dem Uhrzeigersinn 90 vorgespannt.

Die Verschlussfeder 55 der Schließe 4 und des Tasters 18 sind jeweils als Schenkelfeder 55a ausgestaltet.

In Fig. 3 sind die Schließe 4 und der Taster 18 jeweils in einer Endposition 92 gezeigt, in welche die Schließe 4 und der Taster 18 von der jeweiligen Verschlussfeder 55 geschwenkt werden, sofern kein Betätigungsdruck 66 oder Zug 76 auf den Taster 18 ausgeübt wird.

Fig. 3 zeigt das Anschlagmittel 1 in der Schließstellung 5, in der der Taster 18 und die Schließe 4 sich in ihren jeweiligen Ruhestellungen befinden, in denen keine Kräfte von außerhalb des Anschlagmittels 1 auf sie einwirken. Die Schließe 4 ist in der Schließstellung 5 arretiert. Sie kann nicht unmittelbar, sondern nur mittelbar durch Drücken des Tasters bewegt werden.

Ein Sperrbereich 56 des Tasters 18 befindet sich mit der Schließe 4 im Eingriff und blockiert deren Schwenkbewegung 58 um die Schließachse 6. Der Sperrbereich 56 weist eine Sperrfläche 60 auf, die jeweils unter Wirkung einer den Taster 18 in die Schließstellung 5 und einer die Schließe 4 in die Schließstellung 5 vorspannenden Verschlussfeder 55 gegen die komplementäre Gegenfläche 62 der Schließe gedrückt ist. In anderen Ausgestaltungen des Anschlagmittels 1 kann nur die Schließe 4 oder auch nur der Taster 18 mit einer Verschlussfeder 55 vorgespannt sein.

Die Sperrfläche 60 und die Gegenfläche 62 liegen aneinander bezüglich einer Bewegungsrichtung 64 des Tasters 18 um die Tasterachse 24 hinterschneidungsfrei oder allenfalls mit einer nur geringen Hinterschneidung aneinander an. Wird der Taster durch den Betätigungsdruck 66 aus der Schließstellung 5 bewegt, so können die Flächen 60, 62 auseinandergleiten.

Der Taster 18 ist zusätzlich mit einem Getriebeabschnitt 68 versehen, der bewegungsübertragend mit der Schließe 4 in Eingriff gebracht werden kann. In der Schließstellung 5 befindet sich der Getriebeabschnitt 68 bevorzugt außer Eingriff mit der Schließe. Der Getriebeabschnitt 68 kann beispielsweise sich mit der Schließe 4 verzahnen und so die Bewegung des Tasters 18 aufgrund des Druckes 66 mit der dann gegenläufigen Bewegung der Schließe 4 koppeln. Der Verzahnung 69a des Tasters 18 ist eine entsprechend komplementäre Verzahnung 69b der Schließe 4 zugeordnet.

Während der Sperrbereich 56 statisch die Schließe 4 gegen Einwirkung von außen in der Schließstellung 5 hält, dient der Getriebeabschnitt 68 der dynamischen Bewegungsübertragung vom Taster 18 auf die Schließe 4.

Der Sperrbereich 56 und der Getriebeabschnitt 68 können sich, wie Fig. 3 zeigt, am bezüglich der Tasterachse 24 anderen Ende 70 des Tasters 18 befinden. Der Sperrbereich kann insbesondere an einem sich von der Achse weg erstreckenden Fortsatz 72 des Tasters befinden, der zudem eine Zugmittelaufnahme 74 für das Zugmittel 50 ausbilden kann. Die Zugmittelaufnahme 74 kann am Ende 70 angeordnet sein, so dass der Sperrbereich 56 zwischen der Zugmittelaufnahme 74 und der Tasterachse 24 liegt. Der Getriebeabschnitt 68 wiederum kann zwischen Sperrbereich 70 und Tasterachse 24 angeordnet sein.

Durch den Zug 76 auf das Zugmittel 50 wird der Taster 18 mittelbar genauso bewegt wie durch den Betätigungsdruck 66 unmittelbar auf den Taster. Das Zugmittel 50 ist somit ein alternatives Betätigungsmittel.

Wird der Taster 18 gedrückt oder wird am Zugmittel 50 gezogen, so gelangt zunächst der Sperrbereich 56 außer Eingriff mit der Schließe 4 und die Arretierung in der Schließstellung 5 wird aufgehoben. Dies ist in Fig. 4 dargestellt: Das Anschlagmittel 1 befindet sich in einer Freigabestellung 78, in der die Arretierung der Schließe aufgehoben ist, sich die Schließe 4 allerdings noch in der Schließstellung befindet. Der Getriebeabschnitt 68 gelangt gerade in Eingriff mit der Schließe, so dass die Bewegung des Tasters 18 gerade auf die Schließe 4 übertragen wird. Die Sperrfläche 60 und die Gegenfläche 62 sind gerade vollständig außer Eingriff gelangt.

Der Betätigungsdruck 66 bzw. der Zug 76 erfolgt gegen die Kraftwirkung der Verschlussfeder 55 des Tasters 18, so dass die Verschlussfeder 55 gespannt wird.

Während der Bewegung von der Schließstellung 5 (in Fig. 4 gestrichelt eingezeichnet) in die Freigabestellung 78 führt der Taster 18 einen Leerhub 80 aus, in der die Schließe 4 nicht bewegt wird.

Wird weiter auf den Taster 18 gedrückt bzw. am Zugmittel 50 gezogen, so wird die Bewegung des Tasters 18 auf die Schließe 4 übertragen, die sich dadurch gegen die Federkraft der entsprechenden Verschlussfeder 55 aus der Schließstellung 5 bewegt, bis sich das Anschlagmittel 1 in der in Fig. 5 gezeigten Offenstellung 82 befindet, in der der Anschlagkörper 2 geöffnet ist. In der Offenstellung 82 liegt eine tasterseitige Anschlagfläche 84 an einer schließenseitigen Anschlagfläche 86 an und verhindert eine weitere Bewegung der Schließe 4 und des Tasters 18. In der Offenstellung 82 ragt der Taster 18 bevorzugt über seine ganze in der Offenstellung von außen zugängliche Länge noch immer aus dem Anschlagmittel 1 bzw. der Aussparung 26 heraus. Damit kann die gesamte Bewegung des Tasters 18 von der Schließstellung 5 in die Offenstellung 82 unter dem Betätigungsdruck 66 eines einzigen Greifers von außen erfolgen.

Damit wieder die Schließstellung 5 eingenommen wird, wird der Taster 18 oder das Zugmittel 50 einfach losgelassen. Unter Wirkung der wenigstens einen den Taster 18 und/oder die Schließe 4 vorspannenden Verschlussfeder 55 kehren Taster 18 und Schließe 4 über die Freigabestellung 78 in die Schließstellung 5 zurück.

### Bezugszeichen

- 1: Anschlagmittel
- 2: Anschlagkörper
- 4: Schließe
- 5: Schließstellung
- 6: Schließeachse
- 8: Ebene
- 10: von Schließenachse abgewandtes Ende der Schließe
- 12: Formschlusselement der Schließe
- 14: Formschlusselement des Anschlagkörpers
- 16: Sicherungsvorsprung
- 18: Taster
- 20: Schacht
- 22: Grundkörper
- 24: Tasterachse
- 25: vom Anschlagkörper abgewandtes Ende des Tasters
- 26: Aussparung des Grundkörpers
- 28: Schachtwand
- 29: Flachseite des Tasters
- 30: Durchspülöffnung des Tasters
- 32: Grifffläche des Grundkörpers
- 34: Flügel des Grundkörpers
- 36: Betätigungsrichtung des Tasters
- 38: Flachseite des Grundkörpers bzw. Anschlagmittels
- 40: Ebene der Flachseite
- 42: Winkel zwischen Grifffläche und Flachseite
- 44: Befestigungsabschnitt des Anschlagmittels
- 46: Befestigungsauge
- 48: Schutzwulst
- 50: Zugmittel
- 52: dem Taster gegenüberliegende Seite des Anschlagmittels
- 54: Seite des Tasters
- 55: Verschlussfeder
- 55a: Schenkelfeder
- 56: Sperrbereich
- 58: Schwenkbewegung der Schließe
- 60: Sperrfläche des Tasters
- 62: Gegenfläche der Schließe
- 64: Bewegungsrichtung des Tasters
- 66: Betätigungsdruck auf Taster
- 68: Getriebeabschnitt des Tasters
- 69a: Verzahnung des Getriebeabschnitts
- 69b: Verzahnung der Schließe
- 70: von der Tastachse abgewandtes Ende des Tasters
- 72: Fortsatz des Tasters
- 74: Zugmittelaufnahme
- 76: Zug auf Zugmittel
- 78: Freigabestellung
- 80: Leerhub
- 82: Offenstellung
- 84: Anschlagfläche
- 86: Anschlagfläche
- 88: Richtung im Uhrzeigersinn
- 90: Richtung entgegen dem Uhrzeigersinn
- 92: Endposition

## Patentansprüche

1. Anschlagmittel (1) zur einarmigen Betätigung durch einen ferngesteuerten Greifarm insbesondere eines ferngesteuerten Fahrzeuges, mit einer von einer Schließstellung (5) in eine Offenstellung (82) bewegliche Schließe (4), einem in der Schließstellung (5) von der Schließe (4) verschlossenen und in der Offenstellung (82) geöffneten Anschlagkörper (2) und einem Taster (18) zum Öffnen der Schließe (4), der einen Getriebeabschnitt (68), der die Schließe (4) bewegungsübertragend mit dem Taster (18) koppelt, aufweist, wobei der Taster (18) einen Sperrbereich (56) aufweist, der sich in der Schließstellung (5) mit der Schließe (4) im Eingriff befindet und die Schließe (4) in der Schließstellung (5) arretiert, wobei
der Taster (18) auf einer Seite (54) aus einem Grundkörper (22) des Anschlagmittels (1) ragt, **dadurch gekennzeichnet, dass** der Taster (18) auf der anderen Seite (52) mit einer Zugmittelaufnahme (74) zur Befestigung eines Zugmittels (50) versehen ist.

2. Anschlagmittel (1) nach Anspruch 1, **dadurch gekennzeichnet, dass** der Taster (18) von der Schließstellung (5) in die Offenstellung (82) beweglich im Anschlagmittel (1) gehalten ist und eine zwischen der Schließstellung (5) und der Offenstellung (82) angeordnete Freigabestellung (78) aufweist, in der die Arretierung der Schließe (4) durch den Sperrbereich (56) gelöst ist und sich die Schließe (4) in der Schließstellung (5) befindet.

3. Anschlagmittel (1) nach Anspruch 1 oder 2, **dadurch gekennzeichnet, dass** der Taster (18) ausgehend von seiner Schließstellung (5) einen Leerhub (80) aufweist, über den die Schließe (4) in der Schließstellung (5) verbleibt.

4. Anschlagmittel (1) nach Anspruch 3, **dadurch gekennzeichnet, dass** am Ende des Leerhubes (80) der Getriebeabschnitt (68) in Eingriff mit der Schließe (4) gebracht ist.

5. Anschlagmittel (1) nach einem der Ansprüche 1 bis 4, **dadurch gekennzeichnet, dass** in der Zugmittelaufnahme (74) das Zugmittel (50) zum Öffnen der Schließe (4) angebracht ist, das aus der dem Taster (18) gegenüberliegenden Seite (52) des Anschlagmittels (1) ragt.

6. Anschlagmittel (1) nach einem der Ansprüche 1 bis 5, **dadurch gekennzeichnet, dass** der Sperrbereich (56) eine in der Schließstellung (5) an einer Gegenfläche (62) der Schließe (4) in Bewegungsrichtung (64) des Tasters (18) von der Schließstellung (5) in die Offenstellung (82) hinterschneidungsfrei anliegende Sperrfläche (60) aufweist.

7. Anschlagmittel (1) nach einem der Ansprüche 1 bis 6, **dadurch gekennzeichnet, dass** der Taster (18) an seinem einen Ende (25) um eine Tasterachse (24) schwenkbar im Anschlagmittel (1) gehalten ist und sich der Sperrbereich (56) und der Getriebeabschnitt (68) an dem anderen Ende (70) des Tasters (18) befinden.

8. Anschlagmittel (1) nach einem der Ansprüche 1 bis 7, **dadurch gekennzeichnet, dass** in der Schließstellung (5) der Getriebeabschnitt (68) außer Eingriff mit der Schließe (4) bewegt ist.

9. Anschlagmittel (1) nach einem der Ansprüche 1 bis 8, **dadurch gekennzeichnet, dass** eine vom Taster (18) weg weisende Grifffläche (32) an der gegenüber dem Taster (18) liegenden Seite (52) des Anschlagmittels (1) quer zu einer Bewegungsrichtung (64) des Tasters (18) verbreitert ist.

10. Anschlagmittel (1) nach Anspruch 9, **dadurch gekennzeichnet, dass** die Grifffläche (32) an wenigstens einem quer zur Bewegungsrichtung (64) des Tasters (18) vorstehenden Flügel (34) eines den Taster (18) aufnehmenden Grundkörpers (22) ausgebildet ist.

11. Anschlagmittel (1) nach einem der Ansprüche 1 bis 10, **dadurch gekennzeichnet, dass** ein den Taster (18) aufnehmender Grundkörper (22) an einer den Taster (18) zur Betätigung freigebenden Aussparung (26) mit wenigstens einem verdickten Schutzwulst (48) versehen ist.

12. Anschlagmittel (1) nach einem der Ansprüche 1 bis 11, **dadurch gekennzeichnet, dass** die Schließe (4) in Richtung der Schließstellung (5) vorgespannt ist.

## Claims

1. Sling gear (1) for single-arm operation by a remotely controlled gripper, in particular of a remotely controlled vehicle, with a closure (4) that can be moved from a closed position (5) into an open position (82), a sling body (2) that is closed by the closure (4) in the closed position (5) and open in the open position (82), and a push-button (18) for opening the closure (4), the push-button (18) containing a gear section (68) which couples the closure (4) with the push-button (18) by transmitting movement, wherein the push-button (18) has a locking area (56), which engages with the closure (4) in the closed position (5) and locks the closure (4) in the closed position (5), wherein
the push-button (18) protrudes on one side (54) from a base body (22) of the sling gear (1), **characterised in that** the push-button (18) is equipped, on the other side (52), with a traction mechanism receptacle (74) for attaching a traction mechanism (50).

2. Sling gear (1) according to claim 1, **characterised in that** the push-button (18) is held in the sling gear (1) movably from the closed position (5) into the open position (82) and has a release position (78) between the closed position (5) and the open position (82), in which the locking of the closure (4) is released by the locking area (56) and in which the closure (4) is in the closed position (5).

3. Sling gear (1) according to claim 1 or 2, **characterised in that** the push-button (18) comprises an idle stroke (80) starting from its closed position (5), and across which the closure (4) remains in the closed position (5).

4. Sling gear (1) according to claim 3, **characterised in that** the gear section (68) engages with the closure (4) at the end of the idle stroke (80).

5. Sling gear (1) according to any one of claims 1 to 4, **characterised in that** the traction mechanism (50) for opening the closure (4) is fastened in the traction mechanism receptacle (74), which traction mechanism (50) juts out from the side (52) of the sling gear (1) located opposite the push-button (18).

6. Sling gear (1) according to any one of claims 1 to 5, **characterised in that** the locking area (56) has an adjoining locking surface (60), which, in the closed position (5) and in the direction of motion (64) of the push-button (18) from the closed position (5) to the open position (82), abuts a counterface (62) of the closure (4) free of undercuts.

7. Sling gear (1) according to any one of claims 1 to 6, **characterised in that** the push-button (18) is held in the sling gear (1) at one of its ends (25) in such a way that it swivels around an push-button axis (24), and the locking area (56) and the gear section (68) are located at the other end (70) of the push-button (18).

8. Sling gear (1) according to any one of claims 1 to 7, **characterised in that** the gear section (68) is moved disengaged from the closure (4) in the closed position (5).

9. Sling gear (1) according to any one of claims 1 to 8, **characterised in that** a gripping surface (32) pointing away from the push-button (18) is widened at the side (52) of the sling gear (1) located opposite the push-button (18) transversely to a direction of motion (64) of the push-button (18).

10. Sling gear (1) according to claim 9, **characterised in that** the gripping surface (32) is formed on at least one wing (34) of a base body (22) receiving the push-button (18), which wing (34) protrudes transversely to the direction of motion (64) of the push-button (18).

11. Sling gear (1) according to any one of claims 1 to 10, **characterised in that** a base body (22) receiving the push-button (18) is equipped, at a recess (26) revealing the push-button (18) for operation, with at least one thickened protective bulge (48).

12. Sling gear (1) according to any one of claims 1 to 11, **characterised in that** the closure (4) is pre-stressed in the direction of the closed position (5).

## Revendications

1. Moyen d'accrochage (1) permettant un actionnement monobras grâce à un bras de préhension commandé à distance, en particulier d'un véhicule commandé à distance, comprenant un linguet (4) mobile depuis une position de fermeture (5) jusqu'à une position d'ouverture (82), un corps d'accrochage (2) fermé par le linguet (4) dans la position de fermeture (5) et ouvert dans la position d'ouverture (82), et un poussoir (18) permettant d'ouvrir le linguet (4), présentant une section à mécanisme (68) qui couple le linguet (4) au poussoir (18) de manière à transmettre un mouvement, dans lequel le poussoir (18) présente une région de verrouillage (56) qui, dans la position de fermeture (5), est en prise avec le linguet (4) et qui, dans la position de fermeture (5), bloque le linguet (4),
dans lequel, sur un côté (54), le poussoir (18) fait saillie à partir d'un corps de base (22) du moyen d'accrochage (1), **caractérisé en ce que**, sur l'autre côté (52), le poussoir (18) est muni d'un logement de moyen de traction (74) permettant de fixer un moyen de traction (50).

2. Moyen d'accrochage (1) selon la revendication 1, **caractérisé en ce que** le poussoir (18) est retenu de manière mobile dans le moyen d'accrochage (1) depuis la position de fermeture (5) jusqu'à la position d'ouverture (82) et présente une position de libération (78) agencée entre la position de fermeture (5) et la position d'ouverture (82) et dans laquelle le blocage du linguet (4) par la région de verrouillage (56) est supprimé et le linguet (4) se trouve dans la position de fermeture (5).

3. Moyen d'accrochage (1) selon la revendication 1 ou 2, **caractérisé en ce que** le poussoir (18) présente, à partir de sa position de fermeture (5), une course à vide (80) durant laquelle le linguet (4) reste dans la position de fermeture (5).

4. Moyen d'accrochage (1) selon la revendication 3, **caractérisé en ce que** la section à mécanisme (68) est mise en prise avec le linguet (4) à la fin de la course à vide (80).

5. Moyen d'accrochage (1) selon l'une quelconque des revendications 1 à 4, **caractérisé en ce que** le moyen de traction (50) permettant d'ouvrir le linguet (4) est installé dans le logement de moyen de traction (74) et fait saillie à partir du côté (52) du moyen d'accrochage (1) qui est opposé au poussoir (18).

6. Moyen d'accrochage (1) selon l'une quelconque des revendications 1 à 5, **caractérisé en ce que** la région de verrouillage (56) présente une surface de verrouillage (60) qui, dans la position de fermeture (5), est contiguë à une surface homologue (62) du linguet (4) sans contre-dépouille dans la direction de déplacement (64) du poussoir (18) depuis la position de fermeture (5) jusqu'à la position d'ouverture (82).

7. Moyen d'accrochage (1) selon l'une quelconque des revendications 1 à 6, **caractérisé en ce que** le poussoir (18) est retenu pivotant autour d'un axe de poussoir (24) dans le moyen d'accrochage (1) au niveau de son extrémité (25) et la région de verrouillage (56) et la section à mécanisme (68) se trouvent au niveau de l'autre extrémité (70) du poussoir (18).

8. Moyen d'accrochage (1) selon l'une quelconque des revendications 1 à 7, **caractérisé en ce que**, dans la position de fermeture (5), la section à mécanisme (68) est déplacée pour être mise hors de prise par rapport au linguet (4).

9. Moyen d'accrochage (1) selon l'une quelconque des revendications 1 à 8, **caractérisé en ce que**, au niveau du côté (52) du moyen d'accrochage (1) qui est opposé au poussoir (18), une surface de préhension (32) orientée à l'opposé du poussoir (18) est élargie transversalement par rapport à une direction de déplacement (64) du poussoir (18).

10. Moyen d'accrochage (1) selon la revendication 9, **caractérisé en ce que** la surface de préhension (32) est formée au niveau d'au moins un appendice (34) faisant saillie transversalement par rapport à la direction de déplacement (64) du poussoir (18) et appartenant à un corps de base (22) accueillant le poussoir (18).

11. Moyen d'accrochage (1) selon l'une quelconque des revendications 1 à 10, **caractérisé en ce qu'**un corps de base (22) accueillant le poussoir (18) est muni d'au moins un épais bourrelet de protection (48) au niveau d'un évidement (26) donnant libre accès au poussoir (18) en vue de son actionnement.

12. Moyen d'accrochage (1) selon l'une quelconque des revendications 1 à 11, **caractérisé en ce que** le linguet (4) est précontraint en direction de la position de fermeture (5).
